Europäisches Patentamt

(19) European Patent Office

Office européen des brevets

(11) Numéro de publication : **0 290 308 B1**

(12) # FASCICULE DE BREVET EUROPEEN

(45) Date de publication du fascicule du brevet :
21.08.91 Bulletin 91/34

(51) Int. Cl.⁵ : **C01G 31/00, C01G 31/02**

(21) Numéro de dépôt : 88400954.9

(22) Date de dépôt : 20.04.88

(54) Procédé de récupération du vanadium.

(30) Priorité : 29.04.87 FR 8706089

(43) Date de publication de la demande :
09.11.88 Bulletin 88/45

(45) Mention de la délivrance du brevet :
21.08.91 Bulletin 91/34

(84) Etats contractants désignés :
AT BE CH DE ES FR GB GR IT LI LU NL SE

(56) Documents cités :
EP-A- 0 061 018
FR-A- 2 288 154
CHEMICAL ABSTRACTS, vol. 91, no. 26, 24
décembre 1979, page 106, abstract no.
213289s, Columbus, Ohio, US; & CS-A-178 626
(M. MRNKA et al.) 15-05-1979

(73) Titulaire : RHONE-POULENC CHIMIE
25, quai Paul Doumer
F-92408 Courbevoie Cédex (FR)

(72) Inventeur : Seon, Françoise
170, avenue du Président Wilson
F-93100 Montreuil (FR)
Inventeur : Ries, Michel
5, Allée des Noyers
F-94400 Vitry/sur/Seine (FR)

(74) Mandataire : Dubruc, Philippe et al
RHONE-POULENC INTERSERVICES Service
Brevets Chimie 25, quai Paul-Doumer
F-92408 Courbevoie Cédex (FR)

## Description

La présente invention a trait à un procédé de récupération du vanadium à partir de compositions contenant cet élément.

Un tel procédé trouve une application particulièrement avantageuse dans la récupération du vanadium contenu dans des catalyseurs usagés.

On sait en effet que le vanadium, notamment sous la forme de pentoxyde de vanadium $V_2O_5$, est couramment utilisé en tant que catalyseur dans de nombreux procédés chimiques, par exemple pour l'oxydation de l'anhydride sulfureux en anhydride sulfurique, dans le cadre de la fabrication de l'acide sulfurique, ou bien encore pour la réduction en présence d'ammoniac des oxydes d'azote contenus dans les gaz résiduaires.

Or, dans tous les cas, on observe après un temps plus ou moins long d'utilisation, une diminution très marquée de l'activité catalytique des catalyseurs, généralement liée à des phénomènes de vieillissement chimique et/ou mécanique. Dans le cas particulier de la production de l'acide sulfurique, on assiste par exemple à un empoisonnement progressif du catalyseur lié à une transformation partielle ou totale du pentoxyde de vanadium.

C'est la raison pour laquelle, pour maintenir les taux de production, on est obligé de changer périodiquement les catalyseurs usagés par des catalyseurs neufs.

Compte tenu d'une part du coût élevé du vanadium, on comprend aisément l'avantage qu'il peut y avoir à traiter cette matière première résiduaire pour récupérer cet élément.

Compte tenu d'autre part de problèmes liés à l'environnement, il est impératif que les teneurs résiduelles en vanadium des matières usagées rejetées ne dépassent pas 5 g Vanadium/Kg ; ceci impose donc de mettre en oeuvre un procédé présentant des rendements de récupération qui soient compatibles avec une telle exigence.

On connaît par le brevet tchécoslovaque n° 178626 déposé le 16/06/1975, un procédé de récupération du vanadium à partir de catalyseurs résiduaires qui repose sur un lessivage par percolation de la matière catalytique avec de l'eau en présence d'anhydride sulfureux pur, ce dernier servant d'agent réducteur pour les résidus de pentoxyde de vanadium contenus dans la matière catalytique, ce par quoi l'on obtient d'une part un gâteau solide (matière support du catalyseur) et d'autre part un filtrat clair de sulfate de vanadyle.

Cependant, un tel procédé présente l'inconvénient de faire appel à un gaz d'anhydride sulfureux pur, donc coûteux, ce qui le rend particulièrement peu économique à l'échelle d'une exploitation industrielle. Rien dans le document cité n'indique ou ne suggère qu'un autre composé gazeux puisse convenir pour la mise en oeuvre du procédé.

Le but poursuivi par la présente invention est donc de proposer un procédé de récupération du vanadium présentant des rendements élevés et qui soit à la fois simple et particulièrement économique à l'échelle d'une production industrielle.

Ce but est atteint par le procédé selon l'invention de récupération du vanadium à partir d'une composition contenant cet élément, procédé selon lequel on met en contact une suspension aqueuse de ladite composition avec de l'anhydride sulfureux gazeux, puis on récupère après séparation des phases une solution aqueuse de vanadium constituant la production, et qui est caractérisé en ce que l'on utilise un mélange gazeux comprenant de l'anhydride sulfureux et de l'oxygène.

Les travaux de la Demanderesse ont en effet montré, de façon totalement inattendue et surprenante, d'une part que bien qu'en mélange avec un oxydant comme l'oxygène, l'anhydride sulfureux convenait encore pour la réduction du vanadium, et d'autre part que, bien que dilué dans des mélanges pour lesquels la proportion de $SO_2$ peut devenir très faible, les cinétiques de réaction entre le vanadium et l'anhydride sulfureux restaient conservées.

L'intérêt de l'invention apparaîtra clairement aux yeux de l'homme de l'art : ceci signifie en effet qu'il est désormais possible de récupérer du vanadium, à partir notamment de catalyseurs usagés, au moyen d'une lixiviation effectuée avec de l'anhydride sulfureux de qualité industrielle, par exemple un gaz de sortie de combustion industriel à faible teneur en $SO_2$ tel qu'on en rencontre notamment dans un atelier de fabrication d'acide sulfurique.

Mais d'autres caractéristiques et avantages de l'invention apparaîtront plus clairement à la lecture de la description qui va suivre et des exemples concrets, mais non limitatifs, de mise en oeuvre du procédé.

L'invention s'applique donc à toute composition contenant du vanadium présent au moins en partie à l'état d'oxydation +V, notamment sous la forme $V_2O_5$.

A titre d'exemples de telles compositions, on peut citer les catalyseurs utilisés pour la fabrication de l'acide sulfurique ou bien encore ceux utilisés pour la réduction des oxydes d'azote en présence d'ammoniac. De tels catalyseurs se présentent sous la forme de monolithes ou d'extrudés (billes, pastilles, etc) constitués d'un support réfractaire (silice, alumine, mullite, cordierite, dioxyde de titane, etc, pris seuls ou en mélange) et d'une

2

phase active qui est soit imprégnée sur ledit support soit incorporée directement dans la masse par co-malaxage.

La phase active, outre le vanadium présent généralement sous la forme de son oxyde $V_2O_5$, peut bien entendu contenir d'autres éléments tels que, par exemple, du molybdène, du tungstène, du nickel, du cobalt, du cuivre, du chrome, du fer, de l'aluminium, etc.

Ainsi, un catalyseur sulfurique classique peut contenir du vanadium, du potassium et des ions sulfates, le tout supporté sur une silice macroporeuse, les teneurs en ces éléments pouvant bien entendu évoluer du catalyseur initial au catalyseur usagé.

Avant de procéder à la lixiviation, il peut être avantageux de procéder tout d'abord à un broyage du composé de manière à obtenir des particules d'une taille de l'ordre du millimètre, de préférence d'une taille comprise entre 0,05 et 0,5 mm.

La composition ainsi broyée est ensuite mise en suspension dans l'eau dans un réacteur agité. Le rapport de la masse de la composition broyée sur la masse d'eau n'est pas critique : l'intérêt d'augmenter ce rapport est d'obtenir, après traitement, une solution de vanadium plus concentrée ; toutefois la borne supérieure limitante de ce rapport est celle à partir de laquelle la consistance de la suspension obtenue devient telle que des difficultés d'agitation surviennent.

On met alors en contact ladite suspension avec un courant gazeux contenant du $SO_2$ et de l'oxygène. Ce mélange peut bien sûr lui-même être dilué dans un gaz inerte, tel que l'azote. Comme expliqué ci-avant, l'intérêt de l'invention réside dans le fait que ce type de mélange peut correspondre à des gaz de sortie de combustion industriels. Ceci permet de diminuer considérablement le coût de récupération du vanadium, et donc de rendre viable à l'échelle industrielle une telle récupération.

A titre d'exemple, conviennent particulièrement bien pour la mise en oeuvre du procédé selon l'invention, les gaz de sortie de combustion récupérés dans un atelier de fabrication d'acide sulfurique. La composition de ces gaz (pourcentages en poids) est généralement la suivante :

$5\% < SO_2 < 20\%$

$10\% < O_2 < 30\%$

le complément étant assuré par un gaz inerte, tel que l'azote.

Bien entendu, ces fourchettes ne sont données qu'à titre indicatif, car l'invention n'est nullement liée à l'origine ou au mode d'obtention des mélanges $SO_2 + O_2$ utilisés.

La quantité de $SO_2$ introduite par barbotage dans la suspension aqueuse doit au moins correspondre à la stoechiométrie par rapport à la quantité de vanadium +V à extraire.

On opère à une température allant de l'ambiante à 90°C ; on préfère toutefois, pour des raisons d'économie, travailler à température ambiante (18 à 25°C).

On maintient l'agitation, après introduction du $SO_2$, pendant une période pouvant aller de 15 minutes à 4 heures, de manière à parfaire la dissolution du vanadium et/ou d'autres composés tels que des sulfates alcalins.

On obtient alors, après séparation des phases, notamment par filtration, d'une part une solution mère de sulfate de vanadyle et d'autre part un gâteau résiduel constitué principalement de la matière support du catalyseur usagé.

Selon un mode préférentiel de mise en oeuvre de l'invention, ledit gâteau résiduel est alors lavé par remise en suspension dans de l'eau.

Les eaux de ce premier lavage sont alors collectées par filtration. Un deuxième, puis un troisième lavage, si nécessaire, sont réalisés dans les mêmes conditions.

Ces eaux de lavage peuvent alors être introduites dans la solution mère, ou bien encore être recyclées dans le procédé en les utilisant comme solutions de lavage d'une opération ultérieure.

L'obtention de hauts rendements de récupération en vanadium notamment supérieurs à 90%, nécessite d'avoir plusieurs étapes de lavage, eu égard au fait qu'il existe une forte imprégnation du gâteau résiduel par la solution mère ; les lavages successifs permettent d'une part d'augmenter la récupération par dilution de cette solution d'imprégnation, et d'autre part d'aboutir à des gâteaux dans lesquels la teneur résiduelle en vanadium est inférieure à 2 gV/Kg.

La solution de sulfate de vanadyle obtenue en fin de procédé constitue alors une source de vanadium à partir de laquelle la récupération en cet élément peut se faire par tout moyen connu en soi, notamment par réoxydation du vanadium +IV en vanadium +V au moyen d'un oxydant chimique (bioxyde de manganèse, chlorate de sodium, etc) puis précipitation sous forme de métavanadate d'ammonium par ajout d'ammoniaque. Le métavanadate d'ammonium est filtré, lavé, séché puis calciné pour donner du pentoxyde de vanadium pur qui peut alors être réutilisé pour la fabrication de catalyseurs neufs.

Des exemples illustrant l'invention vont maintenant être donnés :

3

## A — Exemples comparatifs

Ces exemples illustrent le procédé de récupération du vanadium tel que décrit dans le brevet tchécoslovaque n° 178626.

Le catalyseur de départ est un catalyseur usagé qui a été utilisé pour l'oxydation du $SO_2$ en $SO_3$ dans le cadre de la fabrication de l'acide sulfurique.

Sa composition, sauf indication contraire, est la suivante (% en poids par rapport à la masse totale du catalyseur)

| | |
|---|---|
| $V_2O_5$ : | 7,5% |
| $K_2O$ : | 11,7% |
| $SO_4$ : | 25,8% |
| Na : | 1,2% |
| Al : | 0,15% |
| Fe : | 0,015% Support : $SiO_2$ |

### Exemple comparatif 1

300 g de catalyseur broyé sont mis en suspension dans 450 g d'eau. Le catalyseur est lixivié, à température ambiante, sous barbotage de $SO_2$ pur pendant 1 heure et sous agitation de 500 T/mn. Puis le mélange est maintenu pendant 4 heures sous agitation. Le rapport molaire $SO_2/V_2O_5$ est de 1,5. La suspension est soutirée puis filtrée. On obtient alors une solution mère de sulfate de vanadyle contenant 41 g/l de vanadium exprimé en $V_2O_5$. Le gâteau résiduel est mis en suspension. Après 2 lavages par 450 g d'eau du gâteau résiduel, le rendement de récupération total en vanadium est de 96%.

### Exemple comparatif 2

500 g de catalyseur broyé sont mis en suspension dans 375 g d'eau et lixiviés sous barbotage de $SO_2$ pur pendant 1 heure sous agitation de 500 T/mn. La lixiviation est réalisée à température ambiante. Puis le mélange est maintenu pendant 4 heures sous agitation. Le rapport molaire $SO_2/V_2O_5$ est de 1,5. Après récupération d'une solution mère de sulfate de vanadyle contenant 69,5 g/l de vanadium exprimé en $V_2O_5$ suivie de 3 lavages du gâteau résiduel par 375 g d'eau, le rendement de récupération total en vanadium est de 96%.

### Exemple comparatif 3

500 g de catalyseur broyé sont mis en suspension dans 375 g d'eau et lisiviés sous barbotage de $SO_2$ pur pendant 1 heure sous agitation de 500 T/mn. La lixiviation est réalisée à la température ambiante. Puis le mélange est maintenu pendant 4 heures sous agitation. Le rapport molaire $SO_2/V_2O_5$ est de 1,0. La suspension est soutirée puis filtrée. On obtient une solution mère de sulfate de vanadyle contenant 65 g/l de vanadium exprimé en $V_2O_5$. Le gâteau résiduel est lavé 3 fois. Ce lavage est effectué par remise en suspension du gâteau dans 375 g d'eau. Après les 3 lavages, le rendement de récupération total en vanadium est de 95%.

## B — Exemples selon l'invention

Le catalyseur usagé de départ est, sauf indication contraire, le même que celui utilisé pour les exemples comparatifs.

### Exemple 4

500 g de catalyseur broyé sont mis en suspension dans 375 g d'eau et lixiviés sous barbotage d'un gaz constitué par un mélange (pourcentages en poids) $SO_2$ : 17%, $O_2$ : 17% et $N_2$ : 66% pendant 1 heure sous agitation de 500 T/mn. La lixiviation est réalisée à température ambiante. Puis le mélange est maintenu pendant 4 heures sous agitation. Le rapport molaire $SO_2/V_2O_5$ est de 1,0. La suspension est soutirée puis filtrée. On obtient une solution mère de sulfate de vanadyle contenant 62 g/l de vanadium exprimé en $V_2O_5$. Le gâteau résiduel est lavé 3 fois par 375 g d'eau. Après 3 lavages du gâteau, le rendement de récupération total en vanadium est de 95%.

4

## Exemple 5

500 g de catalyseur broyé sont mis en suspension dans 375 g d'eau et lixiviés sous barbotage d'un gaz constitué par un mélange (pourcentages en poids) $SO_2$ : 9%, $O_2$ : 18% et $N_2$ : 73% pendant 1 heure sous agitation de 500 T/mn. La lixiviation est réalisée à température ambiante. Plus le mélange est maintenu pendant 4 heures sous agitation. Le rapport molaire $SO_2/V_2O_5$ est de 1,0. La suspension est soutirée puis filtrée. On obtient alors une solution mère de sulfate de vanadyle contenant 60 g/l de vanadium exprimé en $V_2O_5$. Le gâteau résiduel est lavé 3 fois par 375 g d'eau. Après 3 lavages du gâteau, le rendement de récupération total en vanadium est de 94%.

## Exemple 6

250 g de catalyseur broyé (6,5% $V_2O_5$) sont mis en suspension dans 190 g d'eau et lixiviés sous barbotage d'un gaz constitué par un mélange (pourcentages en poids) $SO_2$ : 6%, $O_2$ : 19%, $N_2$ : 75% pendant 1 heure sous agitation de 500 T/mn. La lixiviation est réalisée à température ambiante. Puis le mélange est maintenu pendant 4 heures sous agitation. Le rapport molaire $SO_2/V_2O_5$ est de 1,0. La suspension est soutirée puis filtrée. On obtient alors une solution mère de sulfate de vanadyle contenant 35 g/l de vanadium exprimé en $V_2O_5$. Le gâteau résiduel est lavé 3 fois par 190 g d'eau. Après 3 lavages du gâteau, le rendement de récupération total en vanadium est de 50%.

Ces exemples, et plus particulièrement les exemples 4 et 5, montrent clairement la viabilité du procédé de récupération du vanadium selon l'invention basé sur l'utilisation de $SO_2$ dilué dans des mélanges, ces derniers pouvant correspondre à des gaz dits de qualité industrielle, par exemple ceux rencontrés dans des unités de production d'acide sulfurique.

Bien entendu, l'invention n'est nullement limitée aux modes de réalisation décrits qui n'ont été donnés qu'à titre d'exemples. En particulier, elle comprend tous les moyens constituant des équivalents techniques des moyens décrits ainsi que leurs combinaisons si celles-ci sont mises en oeuvre dans le cadre de la protection comme revendiquée.

## Revendications

1. Procédé de récupération du vanadium à partir d'une composition contenant cet élément, selon lequel on met en contact une suspension aqueuse de ladite composition avec de l'anhydride sulfureux gazeux, puis on récupère, après séparation des phases, une solution aqueuse de vanadium constituant la production, ledit procédé étant caractérisé en ce que l'on utilise un mélange gazeux comprenant de l'anhydride sulfureux et de l'oxygène.

2. Procédé selon la revendication 1 caractérisé en ce que ledit mélange gazeux comprend en outre un gaz inerte, tel que l'azote.

3. Procédé selon la revendication 2 caractérisé en ce que l'on utilise un mélange gazeux de composition suivante (pourcentages en poids) :
$$5\% < SO_2 < 20\%$$
$$10\% < O_2 < 30\%$$
le complément étant assuré par un gaz inerte, tel que l'azote.

4. Procédé selon l'une quelconque des revendications précédentes caractérisé en ce que ledit mélange gazeux est un gaz de sortie de combustion provenant d'une unité de production d'acide sulfurique.

5. Procédé selon l'une quelconque des revendications précédentes caractérisé en ce que ladite composition est un catalyseur du type monolithe ou extrudé, constitué d'un support réfractaire choisi parmi la silice, l'alumine, la mullite, la cordiérite et le dioxyde de titane, pris seuls ou en mélange, et d'une phase active à base de pentoxyde de vanadium.

6. Procédé selon l'une quelconque des revendications précédentes caractérisé en ce que ladite composition est préalablement broyée de manière à obtenir des particules d'une taille de l'ordre du millimètre, de préférence d'une taille comprise entre 0,05 et 0,5 millimètre.

7. Procédé selon l'une quelconque des revendications précédentes caractérisé en ce que l'on utilise une quantité de $SO_2$ égale à la quantité stoechiométriquement nécessaire pour réduire le vanadium contenu dans la composition.

8. Procédé selon l'une quelconque des revendications précédentes caractérisé en ce que ladite mise en contact se fait à une température comprise entre 18 et 25°C.

9. Procédé selon l'une quelconque des revendications précédentes caractérisé en ce que le gâteau rési-

EP 0 290 308 B1

duel obtenu après séparation des phases subit une ou plusieurs étapes de lavage.

10. Procédé selon la revendication 9 caractérisé en ce que les eaux de lavage obtenues après chaque étape de lavage sont ajoutées à la première solution aqueuse de vanadium obtenue après séparation des phases.

11. Procédé selon l'une quelconque des revendications précédentes caractérisé en ce que l'on réextrait le vanadium de ladite solution aqueuse constituant la production en réoxydant le vanadium sous la forme de vanadium +V, en le précipitant par ajout d'ammoniaque, en lavant, séchant puis calcinant le précipité obtenu, de manière à obtenir un pentoxyde de vanadium purifié.

**Patentansprüche**

1. Verfahren zur Rückgewinnung von Vanadium, ausgehend von einem Gemisch, das dieses Element enthält, bei dem man eine wäßrige Suspension dieses Gemisches mit gasförmigem Schwefeldioxid zusammenbringt und anschließend nach Trennung der Phasen eine wäßrige Lösung des Vanadiums, die das Produkt darstellt, zurückgewinnt, wobei das Verfahren dadurch gekennzeichnet ist, daß man ein gasförmiges Gemisch, umfassend Schwefeldioxid und Sauerstoff, verwendet.

2. Verfahren nach Anspruch 1, dadurch gekennzeichnet, daß das gasförmige Gemisch unter anderem ein Inertgas, wie Stickstoff, enthält.

3. Verfahren nach Anspruch 2, dadurch gekennzeichnet, daß man ein gasförmiges Gemisch der folgenden Zusammensetzung (Gew.-%) verwendet :

$$5\% < SO_2 < 20\%$$
$$10\% < O_2 < 30\%,$$

wobei der Rest durch ein Inertgas, wie Stickstoff, geliefert wird.

4. Verfahren nach einem der vorangehenden Ansprüche, dadurch gekennzeichnet, daß das gasförmige Gemisch ein bei der Verbrennung entstehendes Gas, das aus einer Produktionsanlage für Schwefelsäure stammt, ist.

5. Verfahren nach einem der vorangehenden Ansprüche, dadurch gekennzeichnet, daß das Gemisch ein monolithischer oder extrudierter Katalysator ist, bestehend aus einem feuerfesten Träger ausgewählt aus Kieselsäure, Tonerde, Mullit, Cordierit und Titandioxid ist, allein oder im Gemisch, und einer aktiven Phase auf der Basis von Vanadiumpentoxid.

6. Verfahren nach einem der vorangehenden Ansprüche, dadurch gekennzeichnet, daß das Gemisch vorher so zermahlen worden ist, daß man Teilchen mit einer Größe in der Größenordnung von Millimeter, vorzugsweise einer Größe zwischen 0,05 und 0,5 mm, erhält.

7. Verfahren nach einem der vorangehenden Ansprüche, dadurch gekennzeichnet, daß man eine Menge SO$_2$ verwendet, die gleich ist der stöchiometrisch notwendigen Menge, um das in dem Gemisch enthaltene Vanadium zu reduzieren.

8. Verfahren nach einem der vorangehenden Ansprüche, dadurch gekennzeichnet, daß das Zusammenbringen bei einer Temperatur zwischen 18 und 25°C durchgeführt wird.

9. Verfahren nach einem der vorangehenden Ansprüche, dadurch gekennzeichnet, daß der nach Trennung der Phasen verbleibende Kuchen einer oder mehreren Waschstufen unterworfen wird.

10. Verfahren nach Anspruch 9, dadurch gekennzeichnet, daß die nach jeder Waschstufe erhaltenen wäßrigen Waschflüssigkeiten zu der ersten wäßrigen Lösung von Vanadium, die nach Abtrennung der Phasen erhalten worden ist, zugesetzt wird.

11. Verfahren nach einem der vorangehenden Ansprüche, dadurch gekennzeichnet, daß man das Vanadium aus der wäßrigen Lösung, die das Produkt darstellt, wieder extrahiert und das Vanadium wieder zu der Form Vanadium +V oxidiert durch Ausfällen durch Zusatz mit Ammoniak, durch Waschen, Trocknen, anschließendes Calcinieren des erhaltenen Niederschlags, um ein gereinigtes Vanadiumpentoxid zu erhalten.

**Claims**

1. A process for the recovery of vanadium from a composition containing that element, wherein an aqueous suspension of said composition is brought into contact with gaseous sulphur dioxide, then after separation of the phases an aqueous solution of vanadium constituting the production is recivered, said process being characterised in that a gaseous mixture comprising sulphur dioxide and oxygen is used.

2. A process according to claim 1 characterised in that said gaseous mixture further comprises an inert gas such as nitrogen.

6

3. A process according to claim 2 characterised in that a gaseous mixture of the following composition (percentage by weight) is used :

$5\% < SO_2 < 20\%$
$10\% < O_2 < 30\%$

the complement being provided by an inert gas such as nitrogen.

4. A process according to any one of the preceding claims characterised in that said gaseous mixture is a combustion discharge gas issuing from a sulphuric acid production unit.

5. A process according to any one of the preceding claims characterised in that said composition is a catalyst of the monolithic or extruded type formed by a refractory support selected from silica, alumina, mullite, cordierite and titanium dioxide, alone or in mixture, and an active vanadium pentoxide-base phase.

6. A process according to any one of the preceding claims characterised in that said composition is previously crushed so as to produce particles of a size of the order of a millimetre, preferably a size of between 0.05 and 0.5 millimetre.

7. A process according to any one of the preceding claims characterised by using an amount of SO itch is equal to the stoichiometrically required amount for reducing the vanadium contained in the composition.

8. A process according to any one of the preceding claims characterised in that said contacting operation is effected at a temperature of between 18 and 25°C.

9. A process according to any one of the preceding claims characterised in that the residual cake produced after separation of the phases is subjected to one or more washing steps.

10. A process according to claim 9 characterised in that the washing waters otained after each washing step are added to the first aqueous solution of vanadium which is obtained after separation of the phases.

11. A process according to any one of the preceding claims characterised in that the vanadium is re-extracted from said aqueous solution constituting the production by re-oxidising the vanadium in the form of vanadium +V, precipitating it by the addition of ammonia, and washing, drying and then roasting the precipitate obtained, so as to produce a purified vanadium pentoxide.